# EUROPEAN PATENT APPLICATION

(11) **EP 3 641 320 A1**
(43) Date of publication of application: **22.04.2020**
(21) Application number: 18200685.8
(22) Date of filing: 16.10.2018
(51) Int. Cl.: H04N 21/418

(54) **SYSTEM AND METHOD FOR OPERATING A MEDIA PLAYER**

(71) Applicant: Advanced Digital Broadcast S.A., 1293 Bellevue (CH)
(72) Inventor: Adamski, Artur, 65-119 Zielona Gora (PL)
(74) Representative: Blonski, Pawel

(57) **Abstract**

A system for operating a media player wherein the system comprises: a presentation device configured to receive and present media content output by said media player; wherein said presentation device is configured to communicate with a computer network via a first wired connection in order to receive said media content; wherein said presentation device is configured to supply power to the media player via a second wired connection; wherein: the second wired connection being a single cable connection between said media player; and said presentation device being configured for a bidirectional data exchange between said presentation device and said media player and at the same time being configured to supply power from said presentation device to said media player using the second wired connection; wherein said presentation device comprises a conversion module configured to convert data encapsulation between a communication standard used in the first wired connection and the communication standard used in the second wired connection.

## Description

### TECHNICAL FIELD

The present invention relates to a system and method for operating a media player. In particular, the present invention relates to a digital media player that is a home entertainment consumer electronics device, which can connect to a home network to stream digital media such as music, photos or digital video. Digital media players can stream media files from a personal computer, network attached storage (NAS) or another networked media server, to play said media on a television set or a video projector display of a home cinema (Wikipedia).

### BACKGROUND OF THE INVENTION

A rapid growth of a multimedia industry, increase of a digital content availability, storage and sharing capabilities during the recent years, have led to a need of possessing a device capable of playing said content at a modern home. Many kinds of devices for these purposes are available on today's market: starting from standalone media players, through network streaming devices (media streamers), mobile device players, and ending with Smart TV's embedded players. Their main function is to play or stream music, video or photos from internal or external media sources to a TV or AV receivers or loudspeakers.

Some standalone players use an integrated storage (e.g. Hard Disc Drive), whereas devices without said integrated storage, source media content from a network (e.g. Servers). Therefore, they are often called streamers rather than players. Standalone players require displays (e.g. TVs) to display the content, whereas embedded players are usually integrated within TVs.

Since variety of digital media content is widely available on the Internet today, such media players connect to a network and source media content from there. Dedicated free and pay services become also available serving the online content according to user preferences. Popular examples of such services are YouTube or Netflix for video services as well as Spotify for music services.

Higher quality of content and a growing variety of services impose higher requirements and better performance for today's Network Players. Therefore, the aim of this invention is to improve Network Player operability in the area of the reliable content delivery.

Media players usually source content from a computer network. This may be an internal home network or an external, Internet network. Therefore, they connect online via either an Ethernet cable or wirelessly via Wi-Fi. Since today's market trend is to eliminate wired connections, some network players already follow this direction. Known representatives of such devices are Google Chromecast or Amazon Fire TV. They do not offer an Ethernet connector on board, thus utilize the Wi-Fi interface only.

Since such a media player device is usually in a form of stick or dongle, plugged directly into HDMI port of the TV, its location is hidden behind a TV set. TVs usually have some metal parts inside chassis, which limit the media player's Wi-Fi reception ability, especially from the front side.

Additionally, modern TV's are flat, thus they either hang on a wall or stand on a shelf, still close to the wall, thus shielding the device plugged into the rear panel also from the back side and worsening Wi-Fi reception even more.

On the other hand, good Wi-Fi reception is needed in order to play digital content with the high quality. High quality content means high bitrate (high data throughput) received at the device side. Therefore, the media player device's location issue becomes even more critical while streaming high quality media services.

A solution for these particular devices, to improve the content delivery, is a usage of Ethernet-USB adapters integrated within power supply units (PSUs), which deliver a wired Ethernet to the media player device via cable. This solution, however, has several drawbacks, namely:
- requires a dedicated power supply, which increases the cost;
- requires an additional Ethernet slot in a home router;
- requires an additional wire from the router to the device, which is usually problematic to implement. The cable also increases the cost of the entire system;
- in case the device is powered from a TV's USB port (which is allowed) it now must be powered from dedicated PSU, which means providing additional power cable from the mains to the power supply device.

The need of a good quality Wi-Fi signal reception is already visible with a new generation network player devices capable of streaming 4K UHD content of high bitrate by adding Ethernet <-> USB adapter to the device PSU by default.

The present invention relates to providing wired Ethernet connection to such a media player device, without requiring a dedicated adapter.

### SUMMARY AND OBJECTS OF THE PRESENT INVENTION

A first object of the present invention is a system for operating a media player wherein the system comprises: a presentation device configured to receive and present media content output by said media player; wherein said presentation device is configured to communicate with a computer network via a first wired connection in order to receive said media content; wherein said presentation device is configured to supply power to the media player via a second wired connection; the system further comprising: the second wired connection being a single cable connection between said media player; and said presentation device being configured for a bidirectional data exchange between said presentation device and said media player and at the same time being configured to supply power from said presentation device to said media player using the second wired connection; wherein said presentation device comprises a conversion module configured to convert data encapsulation between a communication standard used in the first wired connection and the communication standard used in the second wired connection.

Preferably, said first wired connection is an Ethernet connection.

Preferably, said second wired connection is a USB or a FireWire or a Thunderbolt connection.

Preferably, said conversion module is operating with a hardware based data conversion or a software based data conversion.

Another object of the present invention is a method for operating the media player according to the present invention, the method comprising the steps of: recognizing a plugged in device as the media player; registering said media player device in a network; configuring said media player device; managing data flow by cross-directing data flow between external ports of the second wired connection and the first wired connection by recognizing data destination and data direction; executing a bidirectional data encapsulation conversion between a communication standard used in the first wired connection and the communication standard used in the second wired connection.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for operating a media player. Further details and features of the present invention, its nature and various advantages will become more apparent from the following detailed description of the preferred embodiments shown in a drawing, in which:
Fig. 1 presents a typical configuration of playing video using a Network player;
Fig. 2 presents a typical configuration of playing audio using a Network player;
Figs. 3A-C show a detailed configuration connection of a Network player connected to the local network;
Fig. 4 shows the connection between devices according to the present invention;
Fig. 5 shows an application of the hardware based data conversion circuit in the present invention;
Fig. 6 shows an application of the software based data conversion process according to the present invention;
Fig. 7 presents a flowchart of a method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

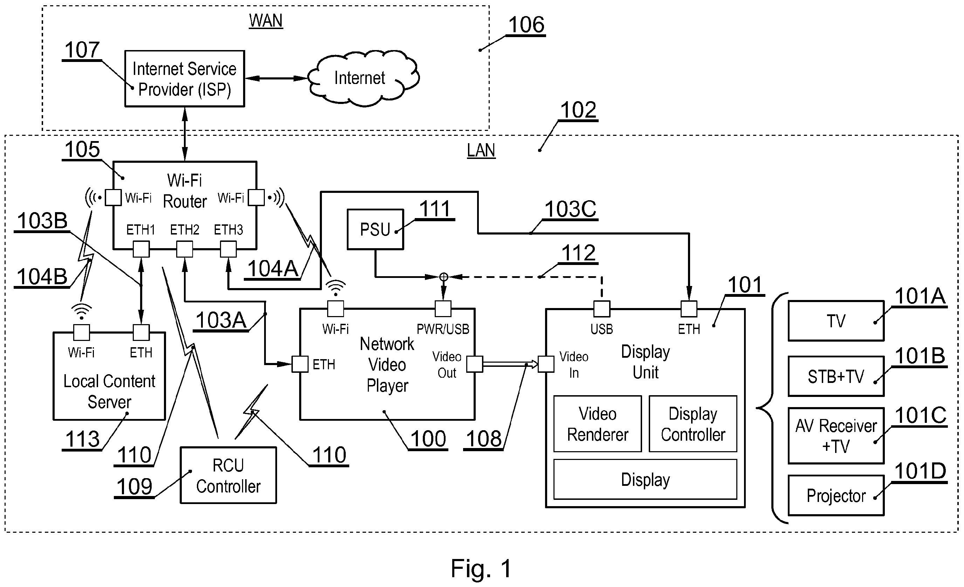

Network players in current systems utilize variety of device combinations in order to play multimedia according to user preferences. A typical configuration for playing video or video services using a Network player is shown in Figure 1.

In this scenario a Video player (100) is connected to a local network (102) via either wired Ethernet cable (103A) or wirelessly via Wi-Fi (104A). The local network is managed by a local router (105) sourcing the Internet network (106) data from an Internet Service Provider (107).

The network video player (100) requires a Display Unit (101) in order to display the digital content on a screen. It usually comprises a video renderer (software that processes video file), a video display controller and a display. The display unit (101) may be, but is not limited to, e.g. a TV (101A), an STB+TV (101B), an AV receiver + TV (101C), a Projector (101D), etc.

The network video player (100) is connected to the Display unit (101) via a video connection, which is usually an HDMI interface (108).

An RCU (109) is used to control the Network Player's (100) functions. Depending on the device functionality, the RCU (109) may communicate with the Network

Player (100) via various wireless interfaces (110) e.g. IR, Bluetooth or Wi-Fi and may be in the form of a dedicated RCU (109) or a mobile device (e.g. mobile phone or tablet).

The Network Player (100) is powered either from an external PSU (111) or from the Display unit (101) via USB port (112). In such configuration, the Network player (100) is able to stream video content either from the Local Content Server (113), connected to the local network (102) (by wired Ethernet connection (103B), or wirelessly (104B)), or from the external network (106).

Embedded systems utilize Network video players integrated within Display units, thus combining the Network Player (100) and its video output (108) and its power supply (111) within the TV set (101). Such integrated solution is optimizing the complexity of the system thus becomes easier to use for an end-user.

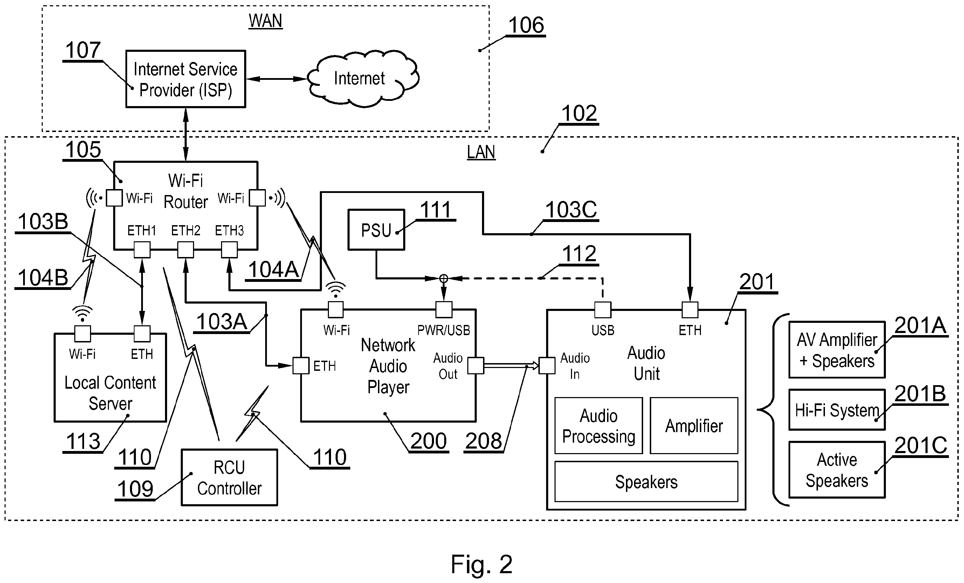

A typical configuration of playing audio or audio services using Network player is shown in Figure 2. In this scenario, similarly the Audio Network Player (200) is connected to the local network (102) alternatively via either wired Ethernet cable (103A) or wirelessly via Wi-Fi (104A).

The Local network (102) is managed by the local Router (105) sourcing the Internet network (106) provided by the Internet Service Provider (107). The Network Audio player (200) uses an Audio Unit (201) to play the audio. The Audio Unit (201) typically comprises an audio processing module, an amplifier and speakers. The Audio unit (201) may be, but is not limited to, e.g. an AV amplifier (201A), a Hi-Fi System (201B) or an Active Speaker (201C) in order to play the digital audio content.

The Network Audio player (200) is connected to the Audio unit via respective audio connection (208), which is usually analogue audio interface, digital audio interface or optical SPDIF. RCU (109) is used to control the Network Audio player's (200) functions. Depending on the device functionality the RCU (109) may communicate with Network Player (200) via various wireless interfaces (110) e.g. IR, Bluetooth or Wi-Fi and may be in the form of dedicated RCU or a mobile device (e.g. mobile phone or tablet).

The Network Audio player (200) is powered either from an external PSU (111) or from Audio Unit via USB port (112). In such configuration the Network Audio player (200) is able to stream the audio content either from the Local Content Server (113), connected to the local network (102) (by wired Ethernet connection (103B) or wirelessly (104B)), or from the external network (106).

Similarly embedded systems utilize Network audio players (200) integrated within Audio Units (201), thus combining the Network Audio player (200) and its audio output (208) and its power supply (111). Such integrated solution is optimizing the complexity of the system thus becomes easier to use for end-users.

Particular configuration, which is a subject of improvement according to the present invention, is the configuration of a Network Player of a newer generation, utilizing a Wi-Fi for the network connection. Such Network Player has a small form factor (usually a stick or a dongle), thus it does not have an Ethernet connector on board and therefore the Wi-Fi interface operation is crucial for its good performance.

A positioning of such Network Player device, which is usually behind the Audio/Video Unit, as well as small size of the device (imposing small size of internal Wi-Fi antennas) limits the Wi-Fi performance significantly.

The basic concept of the present invention is to deliver media content to the Network Player device via an existing wired Ethernet connection of the Audio/Video Unit, while not using Wi-Fi interface of the device and not using a dedicated adapter.

This is realized by utilizing internal USB interface of the Network Player device (acting as a host) in combination with existing USB interface of the Audio/Video Unit (acting as a client). In other words, incoming media content is passed through the Audio/Video Unit, wherein it is subjected to the data conversion from the Ethernet to the USB standard and further passed to the Network Player device via said USB interface. Instead of a USB connection any other wired connection may be used as long as it present in the Network Player and provides data transmission capability together with power supply capability e.g. IEEE 1394 or Thunderbolt

In such a configuration, the data flow omits said Wi-Fi interface (104A) (wireless interface in general), it follows said wired connection only, improving dramatically the data stability and throughput, thus the streaming performance. Since the Network Player device's USB connector often comprises a power function, the connection, according to the present invention, eliminates the need of using a PSU by sourcing the power from the Audio/Video Unit's USB port.

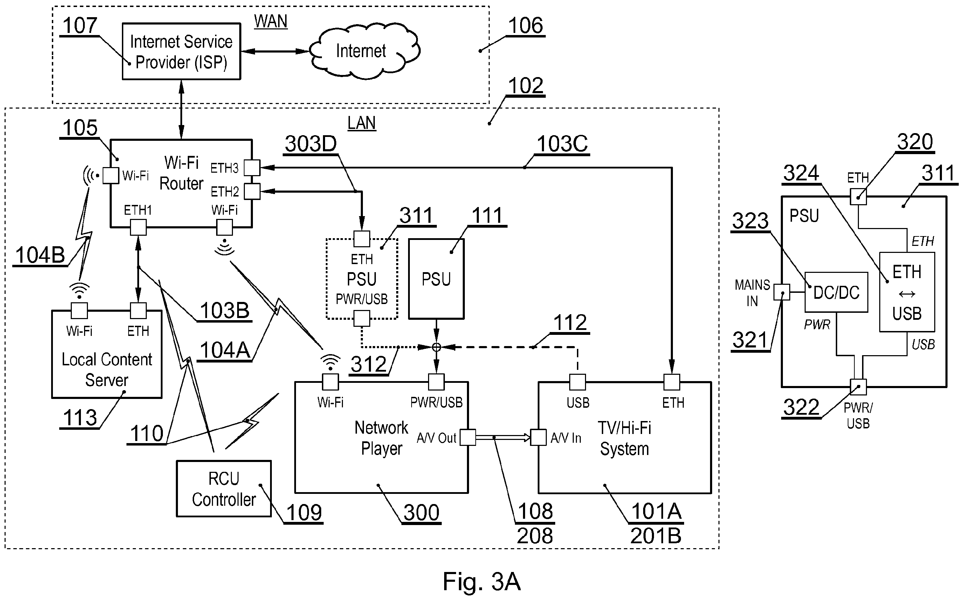

Said Network Player may be of any kind including, but not limited to, a Video Network Player (100) or an Audio Network Player (200), further called a Network Player (300). Figs. 3A-C show a detailed configuration connection of a Network player (300) connected to the local network (102) via said Wi-Fi interface (104A).

The Network Player (300) uses a Video/Audio Unit (e.g. TV/Hi-Fi) in order to play digital media content. The Network Player (300) is connected to the Video/Audio Unit (101A, 201B) via an audio/video connection (108, 208) respectively.

The RCU (109) is used to control the Network Player's (300) functions and may communicate with the Network Player (300) via various wireless interfaces (110). The Network Player (300) is powered by the external PSU (111) or alternatively by the USB port from the TV/Hi-Fi device (112).

In this configuration the Network Player (300) is able to stream media content either from the Local Content Server (113) or from the external network (106). In case of both streaming paths, the content reaches the Network Player (300) via the Wi-Fi interface (104A), which is a bottleneck regarding the data throughput.

A known alternative of the Wi-Fi throughput limitation avoidance is the usage of a dedicated PSU (311) with an integrated ETH<->USB adapter. Such a PSU, apart from its main function which is power delivery (realized by a DC/DC module) (323), it converts data from an Ethernet interface connector (320) to a USB interface connector (322) via an ETH<->USB conversion module (324) in both data flow directions.

The PSU output connector (322) comprises an USB interface shared with Power lines, allowing for both: data transfer and power supply functionality. This configuration allows for wired data connection flow along the entire path from the source to the device, but requires a dedicated PSU (311), an additional cable (303D) and an additional Ethernet slot in the Router (105), thereby significantly increasing the cost of the system (thus being avoided by current media players (300)).

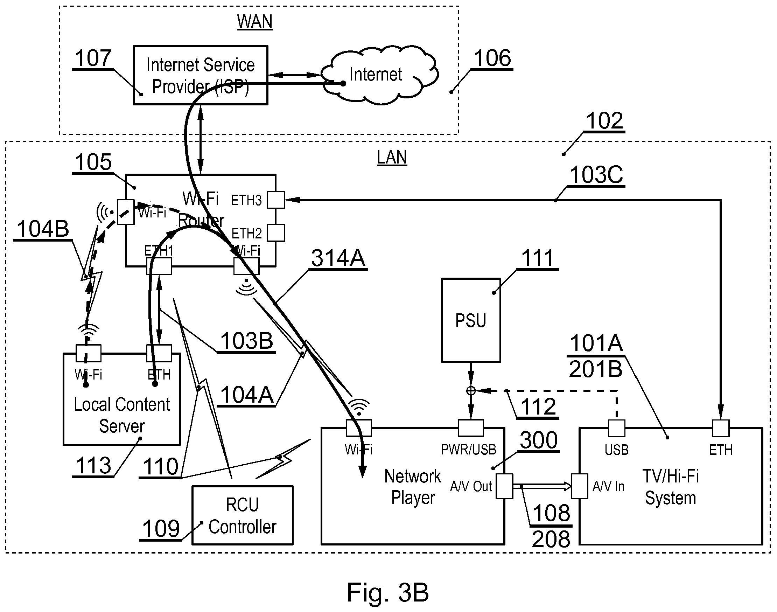

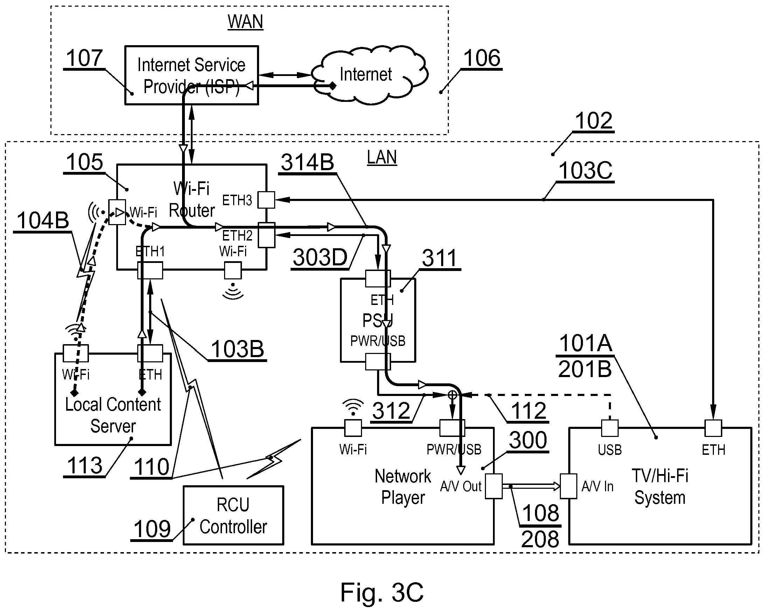

As shown in Fig. 3B a communication path (314A) is a flow of data using the wireless interface of the Network Player (300), whereas the path (314B), of Fig. 3C, is a flow of data using wired interfaces only.

The source of media content arrives to the Router (105) either from the local Server (113) via a wired (103B) or a wireless (104B) connection or it arrives from the Internet network (106).

From the Router the data is further passed via a wireless connection (104A) and reaches the Network Player's (300) core processing unit via its Wi-Fi interface. This wireless connection path (104A) is the most problematic, from the performance point of view, due to the reasons listed already and is a reason of improvement by the present invention.

An alternative path (314B), in Fig. 3C, passes data from the Router (105) via the wired Ethernet interface (303D) first towards a dedicated PSU (311), where it gets converted into USB standard and passed further (312), reaching the Network Player's (300) core processing unit via its USB interface.

The concept of the present invention is to deliver media content to the Network Player device (300) via existing wired Ethernet connection of the Audio/Video Unit (101A, 201B), while not using the Wi-Fi interface of the device and not using a dedicated adapter (311).

This is implemented by two steps: the first is adding a new connection between the Audio/Video Unit (101A, 201B) and the Network Player (300) for a wired data exchange; the second is converting data format in the Audio/Video Unit from the Ethernet interface standard into a USB interface standard, bidirectional, without influencing data content.

An additional connection is implemented, between the Audio/Video Unit (101A, 201B) and the Network Player (300), for a wired data exchange. The proposed connection standard is USB and can be applied here because both devices typically comprise USB ports.

In this configuration, the Network Player device (300) is acting as a host of the interface whereas the Audio/Video unit (101A, 201B) is acting as a client, so the data may flow between the devices.

This new path allows for communication between the devices and resulting bidirectional data exchange.

On top of that, the Audio/Video Unit (101A, 201B) is able to convert the media content data received from the Ethernet interface standard to the USB interface standard, in both directions, without influencing the data content. The data conversion process can be realized either by hardware processing circuits or by software algorithms and will be explained in the following paragraphs. As a summary the incoming media content from the Router (105) is passed through the Audio/Video Unit (101A, 201B), wherein it is subjected to data conversion from the Ethernet to the USB standard (without influencing data content) and further passed to the Network Player (300) via USB interface.

The new connection comprises the USB interface shared with Power lines, allowing for both: data transfer and power supply functionality. Therefore, apart from data transfer, it allows powering the Network Player device (300) from the USB port of Audio/Video Unit (101A, 201 B).

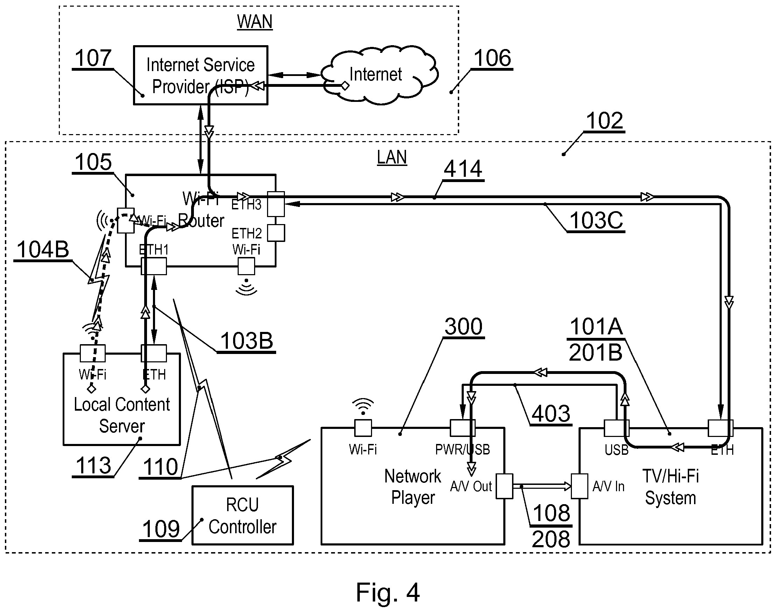

Fig. 4 shows the connection (403) between devices, which allows for wired data flow through the entire path (414) from the Source to the Network Player device (300) and for supplying the Network Player (300) with power. As previously, the Network Player (300) uses the Video/Audio Unit (e.g. TV/Hi-Fi) in order to play the digital media content.

Similarly, the Network Player (300) is connected to the Video/Audio unit (101A, 201B) via audio/video connection (108, 208) respectively. The RCU (109) is used to control Network Player functions and may communicate with the Network Player (300) via various wireless interfaces (110).

Since the connection (403) provides power supply as well as data on one cable, the Network Player (300) is powered directly from the USB port from TV/Hi-Fi device (101A, 201B). This gives a great advantage of not using said PSU, nor the dedicated PSU, and thus lowers the cost of the system.

In this new configuration, the Network Player (300) is configured to stream media content either from the Local Content Server (113) or from the external network (106). In both streaming paths, the content from Router (105) reaches the Network Player (300) via the wired data interface (414), avoiding problematic point of Wi-Fi throughput bottleneck (104A) shown in Fig. 3A-B. Note that the created wired connection does not occupy any of the Router's ports (105), keeping it free for other devices.

The greatest advantage of wired network connection, is that the data flow is, not influenced by external conditions, to which Wi-Fi is vulnerable. Additionally, the throughput of data increases dramatically with respect to real operating conditions of the Network Players operating via Wi-Fi interface. As already mentioned, due to the location of the device (e.g. behind the TV) the Wi-Fi performance is significantly limited by obstacles (TV chassis in front, wall at the back). The present invention eliminates this problem.

Said wired connection of the Network Player (300) gives another great advantage, namely automatic configuration/registration of the device within the network. This means that end-user does not need to configure the Wireless access. Additionally, auto detection feature of the Audio/Video Unit (implemented accordingly in software) would automatically further configure the device for the other, best optimized settings if needed.

In order to allow media content flow via the new connection (403) it is necessary to bidirectionally convert the data from Ethernet standard interface (available at the Audio/Video Unit) into the USB standard interface, which is utilized by the Network Player (300). In the present invention it is be realized either by hardware processing circuits or by software algorithms (or a combination of both), where either operation is to be executed by the Audio/Video Unit.

### Hardware based data conversion

A hardware-based data conversion applies a dedicated single chip USB<->ETH controller. This is a highly integrated circuit chip, usually called a 'Bridge' where all the bidirectional data conversion process is realized. Such chip is known in the Art, for example from a US Patent US7961746B2.

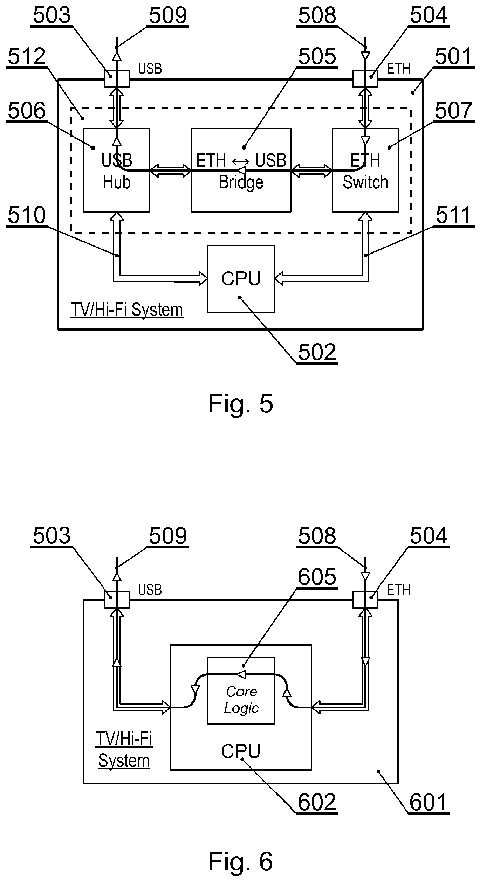

Fig. 5 shows an application of the hardware based data conversion circuit in the present invention (512). The Audio/Video Unit (501) comprises a CPU (502) with core logic, which controls the device and manages data from various interfaces. The USB interface (503) and Ethernet interface (504) are used for communication with external devices of specified functionality (so called Peripherals).

The integrated chip USB<->ETH controller is connected to the USB interface via a USB Hub chip (506) and on the other end it is connected to the Ethernet interface via an ETH Switch chip (507).

Depending on the architecture of the Audio/Video unit (501), the CPU (502) may have or may have not PHY interface included, therefore a USB Hub (506) and an ETH switch (507) chips must be applied according to the present interfaces.

The USB Hub (506) is managing the USB internal interface (510) in terms of USB data traffic between the CPU (502), the Bridge (505) and the USB external port (503) whereas the ETH Switch (507) is managing Ethernet internal interface (511) in terms of Ethernet data traffic between CPU (502), the Bridge (505) and the Ethernet external Port (504).

In the presented architecture the data flow is as follows: incoming media content, present in the form of Ethernet data standard (508) enters Ethernet Port (504) and further is passed through the ETH Switch (507) into the Bridge (505), where the Ethernet standard is converted to USB standard by the Bridge processing circuits, and further passed through USB Hub (506) into the USB Port (503), where it further leaves out the Audio/Video Unit (501) in the form of USB data standard (509).

It is required that the entire path, including Switch processing, Hub processing and bidirectional data conversion process does not influence data content.

### Software based data conversion

A software based data conversion may be realized by the existing CPU of the Audio/Video Unit (101A, 201B). In such architecture, the software algorithms are employed to detect, separate and convert data related to the Network Player (300) connected to the system.

Since the Network Player (300) is registered in the network, the CPU of the Audio/ Video Unit (101A, 201B) is aware of its existence and it is able to manage the incoming Ethernet content depending on whether it is destined to the Network Player (300) or not. In case the content is destined to the Network Player (300), the CPU re-directs the data accordingly to the software conversion process, where the algorithm is converting Ethernet data into USB data standard and further it passes this data to the Network Player (300).

Fig. 6 shows an application of the software based data conversion process according to the present invention. The Audio/Video Unit (601) comprises a CPU (602) with a core logic, which controls the device and manages data from various interfaces. The USB interface (503) and Ethernet interface (504) are used for communication with external devices of specified functionality (so called Peripherals).

The CPU (602) has an ability to manage the internal interfaces in order to configure the required data flow inside. The CPU (602) has an additional ability of performing bidirectional data conversion on the data interface level, by using specific software algorithms (605), in order to convert Ethernet data standard into USB data standard.

In this architecture, the data flow is as follows. The incoming media content, present in the form of Ethernet data standard (508), enters the Ethernet Port (504) and further enters the internal circuitry of the CPU (602), where the CPU core logic is recognizing where the data is destined to.

In case the content is destined to the Network Player (300), the CPU is configuring internal interfaces in a way that the data flows into the software data conversion process. Using specific software algorithms, the CPU (602) is performing a bidirectional conversion process of the Ethernet data standard into USB data standard (605).

The data is further managed by the CPU (602) to leave the internal circuitry of the CPU out to the USB Port (503), where it further leaves out to the Audio/Video Unit (601) in the form of the USB data standard (509).

It is required that the entire path, including internal CPU data flow, content detection and bidirectional conversion process does not influence data content.

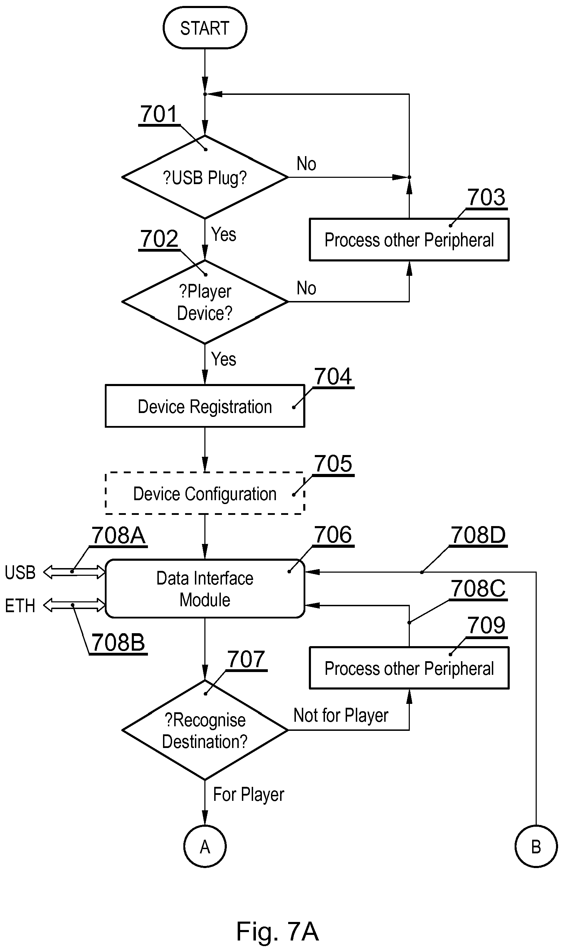

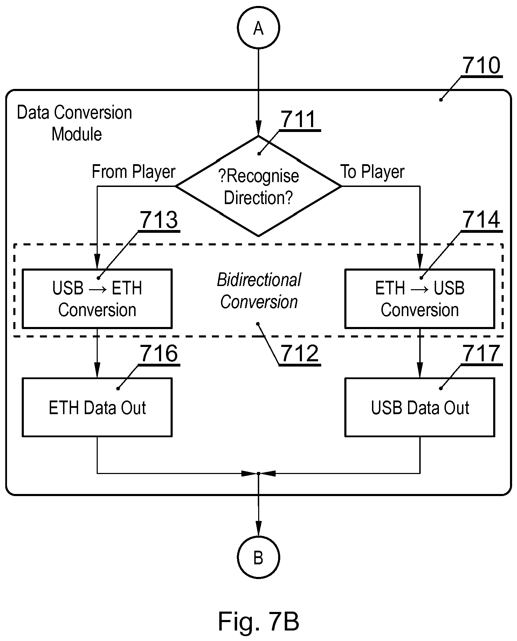

Fig. 7A-B present a flowchart of a method according to the present invention in case data conversion is realized by the core logic of the CPU present in the Audio/ Video Unit.

The procedure starts with the USB port waiting for a plug-in of the peripheral device (701). After the device has been plugged-in, the CPU core logic, using standard USB device initialization alogorithms, is recognizing the device type (702). If the device type is different than the Network Player (e.g. Flash Memory, HDD, others...) then the CPU is processing the peripheral device according to its functions until plug-out (703).

If the device type is the Network Player type (e.g. Google Chromecast) then the CPU, using standard network device initialization alogorithms, is registering the device in the local network (704) and performs optional configuration for device settings optimization (705). An example of such configuration is video output resolution setting, audio format setting, video streaming quality setting, etc.

After the registration/configuration is done the incoming data is passing through Data interface module (706), which manages data flow among the internal CPU interfaces. This module is cross-directing data flow between external ports: USB data (708A), Ethernet data (708B) and internal data interfaces (708C, 708D). The incoming data is passed through first to be recognized if it is Network Player related or other device related (707). If data is other device related then the CPU is processing the related device according to its functions (709). If data is Network Player related then it enters Data Conversion module (710), which is a main subject of the present invention.

Within Data Conversion module CPU core logic is first recognizing the data direction/destination (711). If data is coming from the Network Player it is further directed to the USB to Ethernet data conversion module (713), where the USB interface data is converted into the Ethernet interface data by the CPU core logic. After the conversion process is finished the data in the form of an Ethernet interface standard is further output by the Ethernet output interface (716) out of the Data Conversion module.

If data is coming to the Network Player it is further directed to the Ethernet to USB data conversion module (714), where the Ethernet interface data is converted into the USB interface data by the CPU core logic. After the conversion process is finished the data in the form of an USB interface standard is further output by the USB output interface (717) out of the Data Conversion module.

Due to Data Conversion module (712) is equipped with recognition function of data direction/destination (711) the data conversion can be processed in both data directions. Such bi-directional data conversion is necessary for the communication between connected network devices thus plays a crucial role in the entire system operation.

Data outgoing from Data Conversion module (708D) enters Data Interface module (706), which re-directs the data onto the CPU output interfaces respectively (708A, 708B), and further out of the TV/Hi-Fi System to the external network devices.

Advantages of the present invention are at least as follows:
- increases the device ability of high bitrate content reception thus allows playing higher quality streams;
- eliminates the cost of the Ethernet<->USB adapter (dedicated PSU) and additional Ethernet cable;
- eliminates the need of additional Ethernet slot in the home router;
- dramatically simplifies installation of the device (not only eliminates Ethernet cable, but also simplifies configuration setup);
- eliminates the need of an external PSU;
- applicable for all kinds of systems (audio streaming with AV receivers, Speakers, etc. and video streaming with TVs, STB, etc.);
- improves operability at no cost (no additional hardware needed);
- applicable for any kind of AV system supporting USB and Ethernet ports, including existing market equipment.

The present invention is applicable for all kinds of Audio/Video systems able to operate with Network Players, with contain integrated USB and Ethernet ports. The following equipment examples may consider applying present invention while intending to support improved operability with Network Players: TV sets, Set Top Boxes (STB), Audio/Video receivers, Home Cinema Systems, Projectors, Monitors, AV amplifiers, HiFi Systems, Active Speakers and many others.

Since the Network Players are very popular, improved operability with home Audio/Video systems is strongly desired. Worth to mention is the fact that the present invention may be applied not only for newly produced equipment, but also for market existing equipment via firmware upgrade.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for operating a media player may be performed and/or controlled by one or more computer programs. Such computer programs are typically executed by utilizing the computing resources in a computing device. Applications are stored on a non-transitory medium. An example of a non-transitory medium is a nonvolatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A system for operating a media player (300) wherein the system comprises:
• a presentation device (101A, 201B) configured to receive and present media content output (108, 208) by said media player (300);
• wherein said presentation device (101A, 201B) is configured to communicate with a computer network via a first wired connection (103C) in order to receive said media content;
• wherein said presentation device (101A, 201B) is configured to supply power to the media player (300) via a second wired connection (112);
the system being **characterized in that** it further comprises:
• the second wired connection (403) being a single cable connection between said media player (300); and
• said presentation device (101A, 201B) being configured for a bidirectional data exchange between said presentation device (101A, 201B) and said media player (300) and at the same time being configured to supply power from said presentation device (101A, 201B) to said media player (300) using the second wired connection (403);
• wherein said presentation device (101A, 201B) comprises a conversion module configured to convert data encapsulation between a communication standard used in the first wired connection (103C) and the communication standard used in the second wired connection (403).

2. The system according to claim 1 wherein said first wired connection is an Ethernet connection.

3. The system according to claim 1 wherein said second wired connection is a USB or a FireWire or a Thunderbolt connection.

4. The system according to claim 1 wherein said conversion module is operating with a hardware based data conversion or a software based data conversion.

5. A method for operating the media player (300) according to claim 1, the method comprising the steps of:
• recognizing a plugged in device (701) as the media player (702);
• registering said media player device (300) in a network (704);
• configuring said media player device (705);
• managing data flow (706) by cross-directing data flow between external ports of the second wired connection (708A) and the first wired connection (708B) by
∘ recognizing data destination (707) and data direction (711);
∘ executing (712) a bidirectional data encapsulation conversion between a communication standard used in the first wired connection (103C) and the communication standard used in the second wired connection (403).

6. A computer program comprising program code means for performing all the steps of the computer-implemented method according to claim 5 when said program is run on a computer.

7. A computer readable medium storing computer-executable instructions performing all the steps of the computer-implemented method according to claim 5 when executed on a computer.
